# EUROPEAN PATENT SPECIFICATION

(11) **EP 3 550 110 B1**
(45) Date of publication and mention of the grant of the patent: **02.06.2021**
(21) Application number: 19167429.0
(22) Date of filing: 04.04.2019
(51) Int. Cl.: F01D 5/18

(54) **AIRFOIL HAVING LEADING EDGE COOLING SCHEME WITH BACKSTRIKE COMPENSATION**
SCHAUFELBLATT MIT VORDERKANTENKÜHLUNGSSCHEMA MIT RÜCKSCHLAGKOMPENSATION
PROFIL AÉRODYNAMIQUE AYANT UN SCHÉMA DE REFROIDISSEMENT DE BORD D'ATTAQUE À COMPENSATION DE FRAPPE ARRIÈRE

(30) Priority: 04.04.2018 US 201815945170
(43) Date of publication of application: 09.10.2019
(73) Proprietor: Raytheon Technologies Corporation, Farmington, CT 06032 (US)
(72) Inventor: JENNINGS, Timothy J., New Britain, CT 06051 (US); PROPHETER-HINCKLEY, Tracy A., Rocky Hill, CT 06067 (US)
(74) Representative: Dehns

(56) References cited:
- WO-A1-2015/195088
- US-A1- 2013 280 091
- US-A1- 2014 083 639
- US-A1- 2014 199 177
- US-A1- 2015 184 523

## Description

### BACKGROUND

Illustrative embodiments pertain to the art of turbomachinery, and specifically to turbine rotor components.

Gas turbine engines are rotary-type combustion turbine engines built around a power core made up of a compressor, combustor and turbine, arranged in flow series with an upstream inlet and downstream exhaust. The compressor compresses air from the inlet, which is mixed with fuel in the combustor and ignited to generate hot combustion gas. The turbine extracts energy from the expanding combustion gas, and drives the compressor via a common shaft. Energy is delivered in the form of rotational energy in the shaft, reactive thrust from the exhaust, or both.

The individual compressor and turbine sections in each spool are subdivided into a number of stages, which are formed of alternating rows of rotor blade and stator vane airfoils. The airfoils are shaped to turn, accelerate and compress the working fluid flow, or to generate lift for conversion to rotational energy in the turbine.

Airfoils may incorporate various cooling cavities located adjacent external side walls. Such cooling cavities are subject to both hot material walls (exterior or external) and cold material walls (interior or internal). Although such cavities are designed for cooling portions of airfoil bodies, improved cooling designs may be desirable.

WO 2015/195088 A1 discloses a turbine airfoil usable in a turbine engine and having an internal cooling system with a leading edge impingement channel for enhanced cooling of the leading edge.

US 2013/280091 A1 discloses an airfoil with a body including an impingement wall integrally formed with the leading edge wall to provide an impingement cavity.

US 2014/199177 A1 discloses an airfoil comprising a first cavity extending along the inner surface of the first exterior wall and a first inner wall.

### BRIEF DESCRIPTION

According to a first aspect, there is provided an airfoil for a gas turbine engine as described in claim 1.

The leading edge rib may be aligned with the leading edge of the airfoil body.

The leading edge rib may be offset from the leading edge of the airfoil body.

The first height may be substantially constant.

The first height may be between 0.015 inches and 0.050 inches (0.38 mm and 1.27 mm).

The second height may be a maximum height of the film outlet portion.

The airfoil may include at least one heat transfer augmentation feature located within the leading edge skin core cavity.

The at least one heat transfer augmentation feature may be formed on an internal surface of the external hot wall of the airfoil body.

According to a second aspect, there is provided a core assembly for forming an airfoil of a gas turbine engine as described in claim 7.

The first thickness may be substantially constant.

The first thickness may be between 0.015 inches and 0.050 inches (0.38 mm and 1.27 mm).

The second thickness may be a maximum height of the film outlet portion core.

According to a third aspect, there is provided a method for forming an airfoil of a gas turbine engine as described in claim 11.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The following descriptions should not be considered limiting in any way. The foregoing and other features, and advantages of the present disclosure are apparent from the following detailed description taken in conjunction with the accompanying drawings in which like elements may be numbered alike and:
FIG. 1 is a schematic cross-sectional illustration of a gas turbine engine;
FIG. 2 is a schematic illustration of a portion of a turbine section of the gas turbine engine of FIG. 1;
FIG. 3A is a perspective view of an airfoil;
FIG. 3B is a partial cross-sectional view of the airfoil of FIG. 3A as viewed along the line B-B shown in FIG. 3A;
FIG. 4 is a schematic illustration of an airfoil not falling under the scope of the claims;
FIG. 5 is a schematic illustration of an airfoil in accordance with an embodiment of the present disclosure;
FIG. 6 is a schematic illustration of an airfoil in accordance with an embodiment of the present disclosure;
FIG. 7 is a schematic illustration of an airfoil not falling under the scope of the claims; and
FIG. 8 is a schematic illustration of a core assembly in accordance with an embodiment of the present disclosure.

### DETAILED DESCRIPTION

Detailed descriptions of one or more embodiments of the disclosed apparatus and/or methods are presented herein by way of exemplification and not limitation with reference to the Figures.

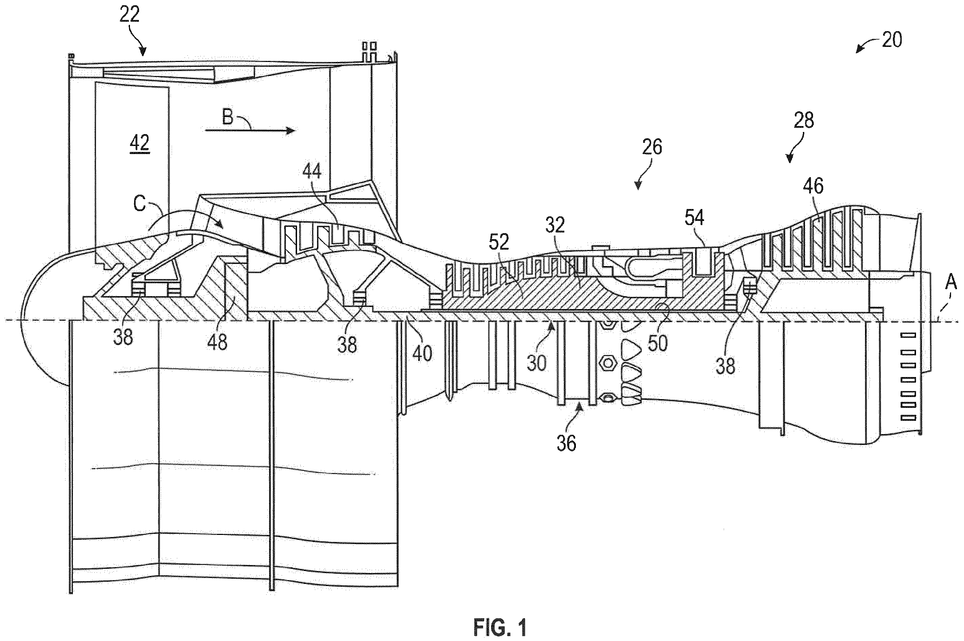

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 can be connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(514.7 °R)]^{0.5}. The "Low corrected fan tip speed" as disclosed herein according to one non-limiting embodiment is less than about 1150 ft/second (350.5 m/sec).

Although the gas turbine engine 20 is depicted as a turbofan, it should be understood that the concepts described herein are not limited to use with the described configuration, as the teachings may be applied to other types of engines such as, but not limited to, turbojets, turboshafts, and three-spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

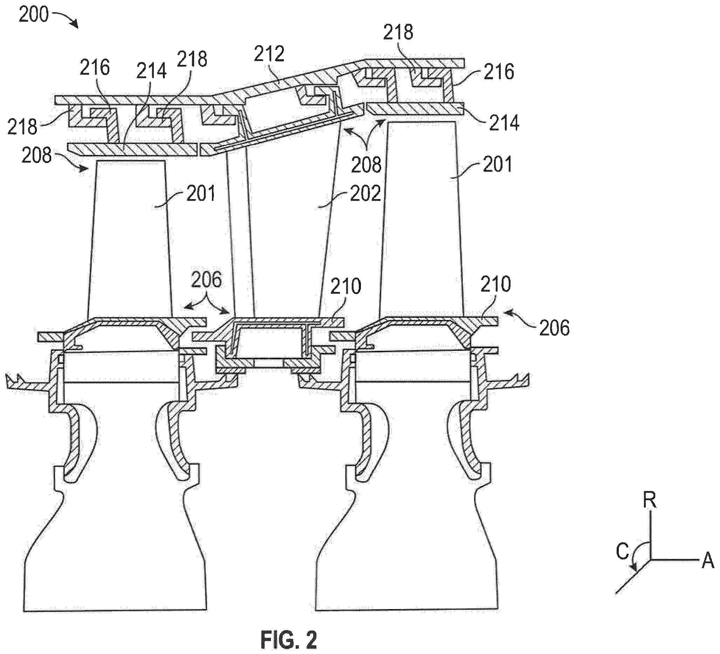

FIG. 2 is a schematic view of a turbine section that may employ various embodiments disclosed herein. Turbine 200 includes a plurality of airfoils, including, for example, one or more blades 201 and vanes 202. The airfoils 201, 202 may be hollow bodies with internal cavities defining a number of channels or cavities, hereinafter airfoil cavities, formed therein and extending from an inner diameter 206 to an outer diameter 208, or vice-versa. The airfoil cavities may be separated by partitions or internal walls or structures within the airfoils 201, 202 that may extend either from the inner diameter 206 or the outer diameter 208 of the airfoil 201, 202, or as partial sections therebetween. The partitions may extend for a portion of the length of the airfoil 201, 202, but may stop or end prior to forming a complete wall within the airfoil 201, 202. Multiple of the airfoil cavities may be fluidly connected and form a fluid path within the respective airfoil 201, 202. The blades 201 and the vanes 202, as shown, are airfoils that extend from platforms 210 located proximal to the inner diameter thereof. Located below the platforms 210 may be airflow ports and/or bleed orifices that enable air to bleed from the internal cavities of the airfoils 201, 202. A root of the airfoil may connect to or be part of the platform 210. Such roots may enable connection to a turbine disc, as will be appreciated by those of skill in the art.

The turbine 200 is housed within a case 212, which may have multiple parts (e.g., turbine case, diffuser case, etc.). In various locations, components, such as seals, may be positioned between the airfoils 201, 202 and the case 212. For example, as shown in FIG. 2, blade outer air seals 214 (hereafter "BOAS") are located radially outward from the blades 201. As will be appreciated by those of skill in the art, the BOAS 214 can include BOAS supports that are configured to fixedly connect or attach the BOAS 214 to the case 212 (e.g., the BOAS supports can be located between the BOAS and the case). As shown in FIG. 2, the case 212 includes a plurality of hooks 218 that engage with the hooks 216 to secure the BOAS 214 between the case 212 and a tip of the blade 201.

As shown and labeled in FIG. 2, a radial direction R is upward on the page (e.g., radial with respect to an engine axis) and an axial direction A is to the right on the page (e.g., along an engine axis). Thus, radial cooling flows will travel up or down on the page and axial flows will travel left-to-right (or vice versa). A circumferential direction C is a direction into and out of the page about the engine axis.

Typically, airfoil cooling includes impingement cavities for cooling various hot surfaces of the airfoils. For example, it may be desirable to position a leading edge impingement cavity immediately adjacent to the external leading edge of the airfoil (e.g., left side edge of the airfoils 201, 202). The leading edge impingement cavity is typically supplied cooling airflow from impingement apertures which serve as conduits for cooling air that originates within the leading edge cooling cavities of the airfoil. Once in the leading edge impingement cavity, the cooling air flow is expelled through an array of shower head holes, thus providing increased convective cooling and a protective film to mitigate the locally high external heat flux along the leading edge airfoil surface.

Traditionally, investment casting manufacturing processes utilize hard tooling "core dies" to create both external airfoil and internal cooling geometries. In order to fabricate internal cooling geometries, it is required that the definition of the features be created in the same relative orientation (approximately parallel) to the "pull" direction of the core die tooling. As a result, the orientation and location of any internal cooling features is limited by virtue of core tooling/core die manufacturing processes used for investment casting of turbine airfoils. Further, various cooling features may require drilling through the external walls or surfaces of the airfoil to fluidly connect to internal cavities thereof (e.g., to form film cooling holes). The orientation of the local internal rib geometry and positioning of the impingement cooling apertures is necessary to ensure optimal internal convective heat transfer characteristics are achieved to mitigate high external heat flux regions.

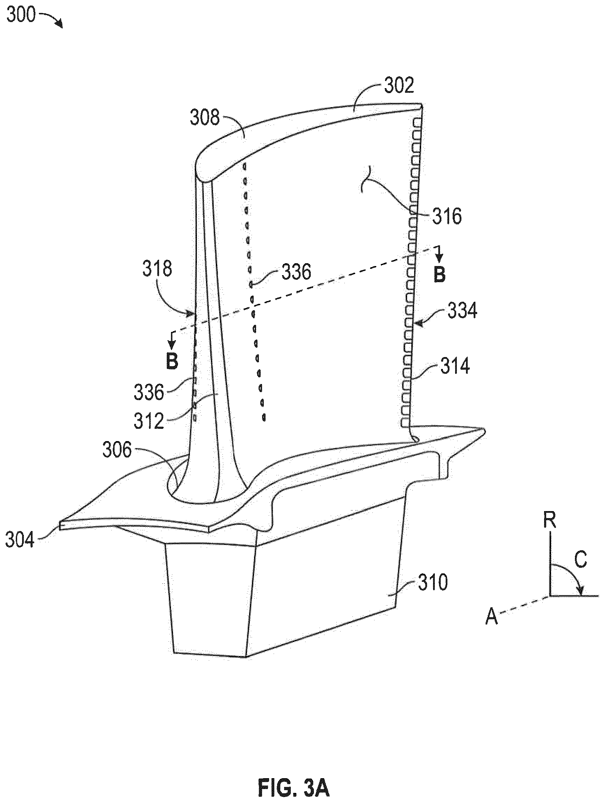

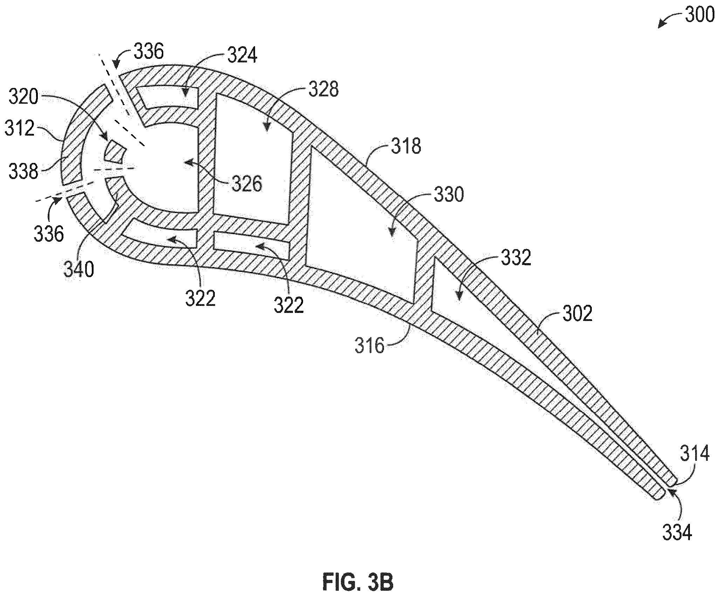

For example, turning now to FIGS. 3A-3B, schematic illustrations of an airfoil 300 are shown. FIG. 3A is an isometric illustration of the airfoil 300. FIG. 3B is a cross-sectional illustration of the airfoil 300 as viewed along the line B-B shown in FIG. 3A. The airfoil 300, as shown, is arranged as a blade having an airfoil body 302 that extends from a platform 304 from a root 306 to a tip 308. The platform 304 may be integrally formed with or attached to an attachment element 310, the attachment element 310 being configured to attach to or engage with a rotor disc for installation of the airfoil body 302 thereto. The airfoil body 302 extends in an axial direction A from a leading edge 312 to a trailing edge 314, and in a radial direction R from the root 306 to the tip 308. In the circumferential direction C, the airfoil body 302 extends between a pressure side 316 and a suction side 318.

As shown in FIG. 3B, illustrating a cross-sectional view of the airfoil 300, as viewed along the line B-B shown in FIG. 3A, the airfoil body 302 defines or includes a plurality of internal cavities to enable cooling of the airfoil 300. For example, as shown, the airfoil 300 includes a plurality of forward and side cooling cavities 320, 322, 324. A leading edge cavity 320 is located along the leading edge 312 of the airfoil body 302, pressure side cavities 322 are arranged along the pressure side 316 and proximate the leading edge 312, and a suction side cavity 324 is arranged along the suction side 318 and proximate the leading edge 312. In the relative middle of the airfoil body 302, the airfoil 300 includes various main body cavities 326, 328, 330, 332 and, at the trailing edge 314, a trailing edge slot 334. Some of the main body cavities may form a serpentine flow path through the airfoil 300, (e.g., cavities 328, 330, 332). Further, one or more of the main body cavities may be arranged to provide cool impinging air into the forward and side cooling cavities 320, 322, 324 (e.g., cavity 326). In some embodiments described herein, the cavity 326 may be referred to as a leading edge feed cavity. Although shown with a specific internal cooling cavity arrangement, airfoils in accordance with the present disclosure may include additional and/or alternative cavities, flow paths, channels, etc. as will be appreciated by those of skill in the art, including, but not limited to, tip cavities, serpentine cavities, trailing edge cavities, etc.

Air that impinges into the leading edge cavity 320 (or other forward and side cooling cavities 320, 322, 324) may be expunged onto a hot external surface of the airfoil 300 through one or more film cooling holes 336. During manufacturing of the airfoil 300, the film cooling holes 336 may be drilled into or through the external surfaces of the airfoil body 302. With the increasing use of thin or narrow forward and side cooling cavities, sometimes referred to as hybrid cooling cavities or hybrid skin cores, such drilling operations may result in backstrikes. Backstrikes are events when a drill bit, laser, EDM electrode, or machining process/component passes through the exterior wall, into the internal cavity, and contacts an interior wall of the airfoil, causing damage thereto. With reference to FIGS. 3B, skin core cavities are defined between an external hot wall 338 and an internal cold wall 340 of the airfoil body 302. In accordance with embodiments of the present disclosure, the skin core cavities may have very thin heights, e.g., on the order of about 0.015 to 0.050 inches (0.38 mm to 1.27 mm). Cool air from the leading edge feed cavity 326 may pass through impingement holes in the internal cold wall 340 to impinge upon the external hot wall 338, with the air subsequently flowing out through the film cooling holes 336.

In accordance with embodiments of the present disclosure, leading edge skin core cavities are modified in shape and geometry to allow for improved leading edge cooling (e.g., impingement cooling) while also allowing for film cooling holes to be easily formed in the airfoil without backstrike. For example, one or more leading edge skin core cavities of the present disclosure are formed having an impingement inlet portion and a film outlet portion, with the height of the ends being configured to achieve desired characteristics (e.g., improved impingement cooling and/or reduced/eliminated backstrike).

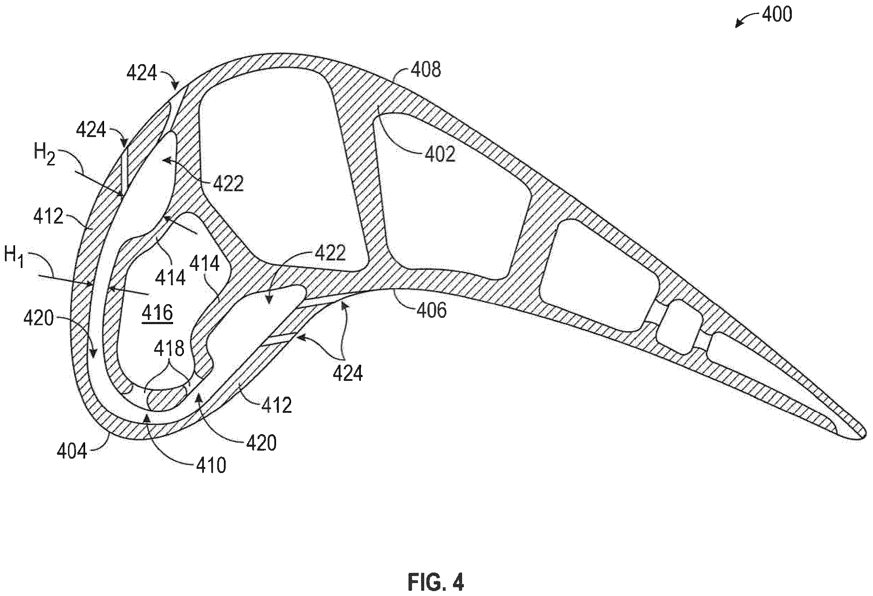

For example, turning to FIG. 4, a schematic illustration of an airfoil 400 not forming part of the invention is shown. The airfoil 400 may be similar to the airfoils shown and described above, and thus similar features may not be described again. The airfoil 400 includes an airfoil body 402 having a leading edge 404, a pressure side 406, and a suction side 408. At the leading edge 404, the airfoil 400 includes a leading edge skin core cavity 410 that is defined between an external hot wall 412 and an internal cold wall 414. The internal cold wall 414 encloses an internal leading edge feed cavity 416 that is arranged to supply cool impinging air into the leading edge skin core cavity 410 through one or more impingement holes 418.

The leading edge skin core cavity 410 includes two primary portions or ends, depending on the specific configuration. As shown, the leading edge skin core cavity 410 includes an impingement inlet portion 420 and a film outlet portion 422. In this embodiment, as shown, there are two inlet impingement holes 418 that impinge upon the external hot wall 412 proximate the leading edge 404 of the airfoil. The impinging, cool air will then flow from the impingement inlet portion 420 to the film outlet portion 422 wherein the air will be expelled to the external surface of the airfoil 400 through one or more film cooling holes 424. Although the term "end" may be used herein, those of skill in the art will appreciate that the "inlet portion" is a portion of the cavity having an inlet, with a cooling flow flowing from the inlet (i.e., impingement hole 418) to the outlet (e.g., film cooling hole 424). Thus, in this embodiment, the flow enters through the two impingement holes 418 and then flows along the pressure and suction sides (at the forward or leading edge section of the airfoil 400) to the respective outlet portions 422. The impingement inlet portion(s) 420 and the film outlet portion(s) 422 may be formed as cavities or air plenums having different geometries, but forming the complete leading edge skin core cavity 410.

For example, as shown, the impingement inlet portion 420 has a substantially constant first height H₁. The first height H₁ is selected to optimize impingement cooling of the external hot wall 412 at or along the leading edge 404, with impinging air being directed through the impingement holes 418. The film outlet portion 422 is an increased height cavity portion having a maximum second height H₂. The geometry of the film outlet portion 422 may not be constant, but rather may be optimized to minimize backstrike occurring during the formation (manufacture) of the film cooling holes 424. The first height H₁ and the second height H₂ are measured as a distance from an internal surface of the external hot wall 412 (defining a surface of the leading edge skin core cavity 410) and a surface of the internal cold wall 414 (defining a surface of the leading edge skin core cavity 410).

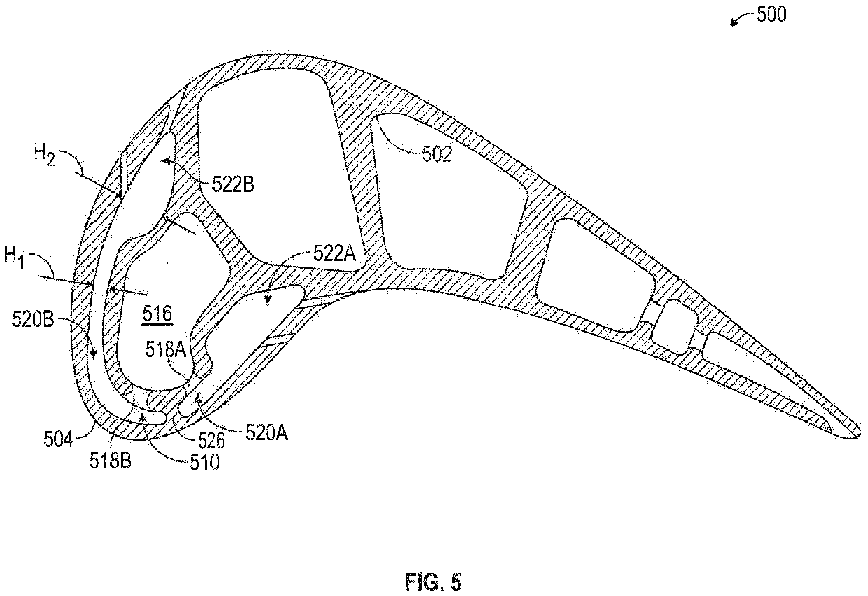

In accordance with embodiments of the present disclosure, the first height H₁ may be between about 0.015 inches (0.38 mm) and about 0.050 inches (1.27 mm). Further, the second height H₂ may be a height that is about 0.075 inches (1.91 mm) or greater. Turning now to FIG. 5, an airfoil 500 in accordance with an embodiment of the present disclosure is schematically shown. The airfoil 500 may be similar to that shown and described with respect to FIG. 4. The airfoil 500 has an airfoil body 502 defining various internal cavities with a leading edge feed cavity 516 positioned proximate a leading edge 504 of the airfoil 500 and feeding cooling air into a leading edge skin core cavity 510. The leading edge feed cavity 516 supplies impinging air through impingement holes 518a, 518b into respective impingement inlet portions 520a, 520b. A first impingement inlet portion 520a and a second impingement inlet portion 520b are separated by a leading edge rib 526. The leading edge rib 526 may fluidly separate the first impingement inlet portion 520a and the second impingement inlet portion 520b. However, similar to the embodiment of FIG. 4, the impinging air will flow through the respective impingement inlet portions 520a, 520b to respective first and second film outlet portions 522a, 522b. Further, as described above, the impingement inlet portions 520a, 520b have substantially constant first height H₁ and the film outlet portions 522a, 522b have a maximum second height H₂, with the second height H₂ being greater than the first height H₁.

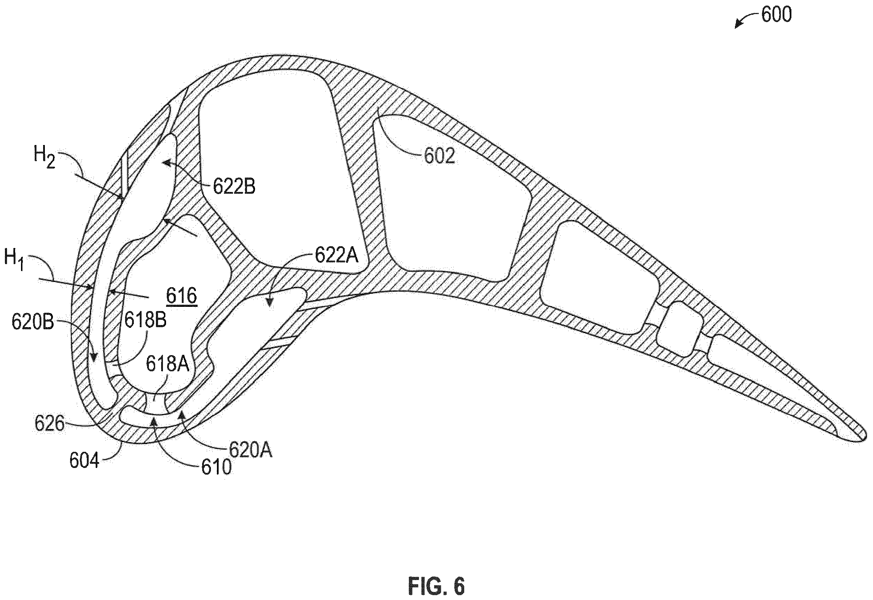

Turning now to FIG. 6, an airfoil 600 in accordance with an embodiment of the present disclosure is schematically shown. The airfoil 600 may be similar to that shown and described above. The airfoil 600 has an airfoil body 602 defining various internal cavities with a leading edge feed cavity 616 positioned proximate a leading edge 604 of the airfoil 600 and feeding cooling air into a leading edge skin core cavity 610. The leading edge feed cavity 616 supplies impinging air through impingement holes 618a, 618b into respective impingement inlet portions 620a, 620b. A first impingement inlet portion 620a and a second impingement inlet portion 620b are separated by a leading edge rib 626. The leading edge rib 626 may fluidly separate the first impingement inlet portion 620a and the second impingement inlet portion 620b. Impinging air will flow through the respective impingement inlet portions 620a, 620b to respective first and second film outlet portions 622a, 622b. Further, as described above, the impingement inlet portions 620a, 620b have substantially constant first height H₁ and the film outlet portions 622a, 622b have a maximum second height H₂, with the second height H₂ being greater than the first height H₁. In this embodiment, the leading edge rib 626 is located coincident with a leading edge 604, whereas in the embodiment of FIG. 5, the leading edge rib 526 is offset from the leading edge 504.

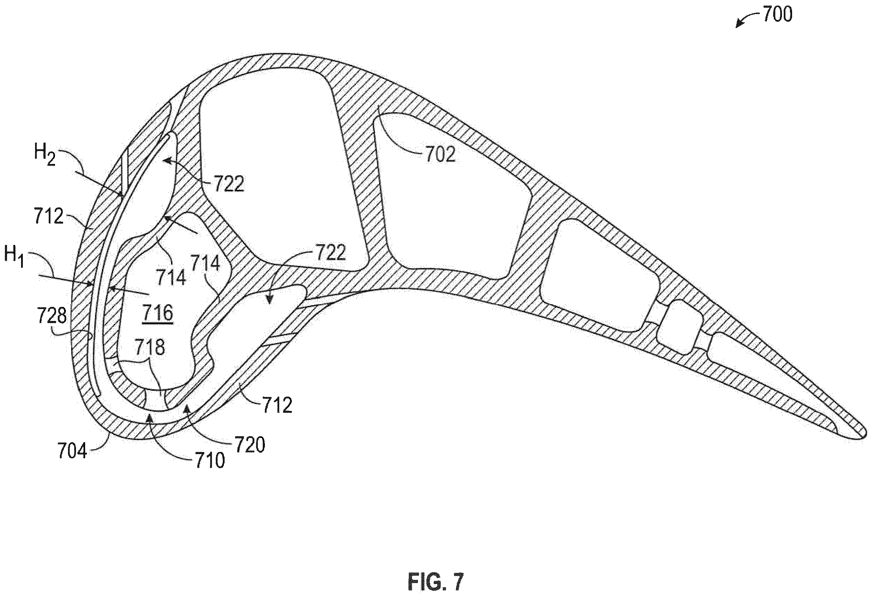

Turning now to FIG. 7, an airfoil 700 not forming part of the invention is schematically shown. The airfoil 700 may be similar to that shown and described above. The airfoil 700 has an airfoil body 702 defining various internal cavities with a leading edge feed cavity 716 positioned proximate a leading edge 704 of the airfoil 700 and feeding cooling air into a leading edge skin core cavity 710. The leading edge feed cavity 716 supplies impinging air through impingement holes 718 into an impingement inlet portion 720. Impinging air will flow through the impingement inlet portion 720 to film outlet portions 722. Similar to that described above, the impingement inlet portion 720 has a substantially constant first height H₁ and the film outlet portions 722 have a maximum second height H₂, with the second height H₂ being greater than the first height H₁. In this embodiment, the leading edge skin core cavity 710 includes a heat transfer augmentation feature 728 therein. The heat transfer augmentation feature 728 may be one or more features that increase a thermal transfer along the flow path of the leading edge skin core cavity 710. In this illustrative embodiment, the heat transfer augmentation feature 728 is formed on an interior surface of an external hot wall 712 of the airfoil body 702. However, in other embodiments, heat transfer augmentation features may be formed on the cold wall 714 or a combination of the cold wall 714 and the hot wall 712. Further, although shown with the heat transfer augmentation feature 728 shown extending from the leading edge 704 along the suction side of the airfoil 700, heat transfer augmentation features may extend along the pressure side or a combination of the pressure and suction sides. The heat transfer augmentation features may be trip strips, chevrons, pedestals, depto warts, or other structural features that may alter an airflow and/or increase a surface area to enable improved thermal transfer, as will be appreciated by those of skill in the art.

The above illustrative examples are provided merely for explanatory purposes and variations and/or combinations of features shown and described above are possible. Further, in embodiments having a leading edge rib, the position and orientation of such rib may be optimized to achieve a desired cooling scheme along the leading edge of the airfoil. Moreover, although shown in the above embodiments with two impingement holes, those of skill in the art will appreciate that in some embodiments, a single impingement hole may be employed and in other embodiments, more than two impingement holes may be used. Similarly, any number of film cooling holes may be formed at the film outlet portion of the leading edge skin core cavity.

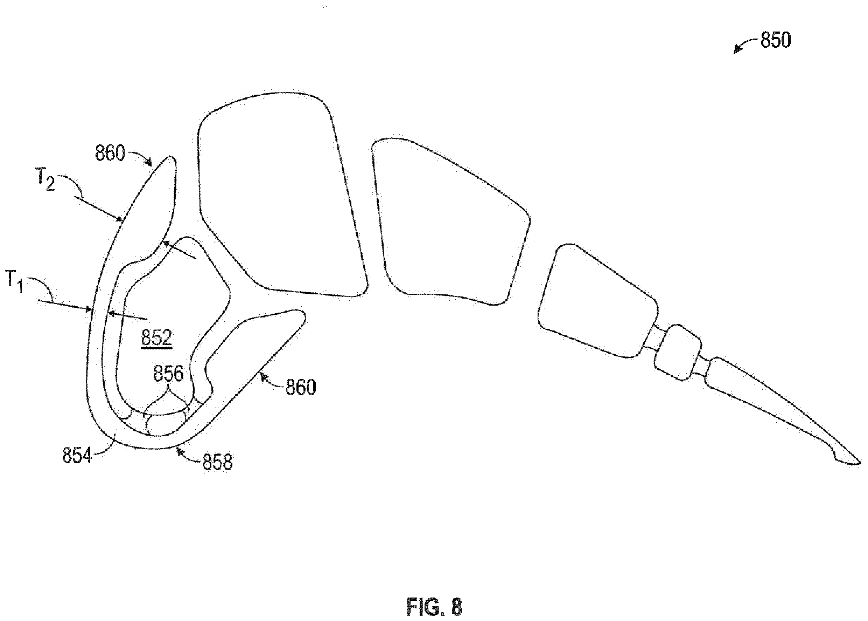

To form the airfoils shown and described above, a core assembly may be used. For example, turning to FIG. 8, a core assembly 850 in accordance with an embodiment of the present disclosure is shown. The core assembly 850 may be used during the manufacture of an airfoil of the present disclosure, such as the airfoil shown in FIG. 4. The core assembly 850 includes a plurality of cores to form internal cavities of an airfoil. As shown, the core assembly 850 includes a leading edge feed cavity core 852 with a leading edge skin core 854 that is arranged to form a leading edge skin core cavity as shown and described above. The leading edge feed cavity core 852 is connected to the leading edge skin core 854 by one or more impingement hole core elements 856.

The leading edge skin core 854 has an impingement inlet portion core 858 and a film outlet portion core 860. The leading edge skin core 854 has a substantially constant first thickness T₁ along the length of the impingement inlet portion core 858. The first thickness T₁ is selected to optimize impingement cooling of an external hot wall of a formed airfoil body. The film outlet portion core 860 is an increased thickness portion having a maximum second thickness T₂. The geometry of the film outlet portion core 860 may not be constant, but rather may be optimized to minimize backstrike occurring during the formation (manufacture) of film cooling holes in a formed airfoil body. The first thickness T₁ and the second thickness T₂ are associated with the measured distance between internal surfaces the formed leading edge skin core cavity.

After formation of an airfoil body using the core assembly 850, film cooling holes may be formed in the external wall of the airfoil body. Advantageously, because of the film outlet portion cores 860 and the formed film outlet portions of the leading edge skin core cavity, backstrike may be eliminated while maintaining improved cooling at and/or along the leading edge of a formed airfoil.

## Claims

1. An airfoil (400; 500; 600; 700) for a gas turbine engine (20), the airfoil comprising:
an airfoil body (402; 502; 602; 702) extending between a leading edge (404; 504; 604; 704) and a trailing edge in an axial direction and between a pressure side (406) and a suction side (408) in a circumferential direction;
an internal cold wall (414; 714) defining a leading edge feed cavity (416; 516; 616; 716) proximate the leading edge of the airfoil body;
an external hot wall (412; 712) defining a leading edge skin core cavity (410; 510; 610; 710) between the external hot wall and the internal cold wall, wherein the leading edge skin core cavity comprises an impingement inlet portion (420; 520A, 520B; 620A, 620B; 720) and a film outlet portion (422; 522A, 522B; 622A, 622B; 722);
at least one impingement hole (418; 518A, 518B; 618A, 618B; 718) formed in the internal cold wall and fluidly connecting the leading edge feed cavity to the impingement inlet portion; and
at least one film cooling hole (424) formed in the external hot wall and fluidly connecting the film outlet portion to an exterior of the airfoil body,
**characterised in that** the impingement inlet portion has a first height (H₁) defined as a distance between the external hot wall and the internal cold wall for a length of the impingement inlet portion, and the film outlet portion has a second height (H₂) that is greater than the first height; and
a leading edge rib (526; 626) extends between the external hot wall and the internal cold wall and divides the leading edge skin core cavity (510; 610), wherein the leading edge rib fluidly separates the leading edge skin core cavity to define a first impingement inlet portion (520A; 620A) and a second impingement inlet portion (520B; 620B).

2. The airfoil of claim 1, wherein the leading edge rib (626) is aligned with the leading edge (604) of the airfoil body (602), or wherein the leading edge rib (526) is offset from the leading edge (504) of the airfoil body (502).

3. The airfoil of any preceding claim, wherein the first height (H₁) is substantially constant.

4. The airfoil of any preceding claim, wherein the first height (H₁) is between 0.015 inches and 0.050 inches (0.38 mm and 1.27 mm).

5. The airfoil of any preceding claim, wherein the second height (H₂) is a maximum height of the film outlet portion (422; 522A, 522B; 622A, 622B; 722).

6. The airfoil of any preceding claim, further comprising at least one heat transfer augmentation feature (728) located within the leading edge skin core cavity (710); optionally wherein the at least one heat transfer augmentation feature is formed on an internal surface of the external hot wall (712) of the airfoil body (702).

7. A core assembly (850) for forming the airfoil (400; 500; 600; 700) of any preceding claim, the core assembly comprising:
a leading edge feed cavity core (852) located to form an internal leading edge feed cavity of a formed airfoil; and
a leading edge skin core (854) positioned relative to the leading edge feed cavity core and connected thereto by at least one impingement hole core element (856), wherein the leading edge skin core comprises an impingement inlet portion core (858) and a film outlet portion core (860), wherein the leading edge skin core is arranged to form a leading edge skin core cavity at a leading edge of the formed airfoil;
wherein the impingement inlet portion core has a first thickness (T₁) and the film outlet portion has a second thickness (T₂) that is greater than the first thickness.

8. The core assembly of claim 7, wherein the first thickness (T₁) is substantially constant.

9. The core assembly of claim 7 or claim 8, wherein the first thickness (T₁) is between 0.015 inches and 0.050 inches (0.38 mm and 1.27 mm).

10. The core assembly of any of claims 7 to 9, wherein the second thickness (T₂) is a maximum height of the film outlet portion core (860).

11. A method for forming the airfoil (400; 500; 600; 700) of any of claims 1 to 6, the method comprising:
forming the airfoil body (402; 502; 602; 702);
forming the at least one impingement hole (418; 518A, 518B; 618A, 618B; 718) in the internal cold wall and fluidly connecting the leading edge feed cavity to the impingement inlet portion; and
forming the at least one film cooling hole (424) in the external hot wall and fluidly connecting the film outlet portion to an exterior of the airfoil body; **characterised by**
forming a leading edge rib (526; 626) extending between the external hot wall and the internal cold wall and dividing the leading edge skin core cavity (510; 610), wherein the leading edge rib fluidly separates the leading edge skin core cavity to define a first impingement inlet portion (520A; 620A) and a second impingement inlet portion (520B; 620B).

## Patentansprüche

1. Schaufelprofil (400; 500; 600; 700) für ein Gasturbinentriebwerk (20), wobei das Schaufelprofil Folgendes umfasst:
einen Schaufelprofilkörper (402; 502; 602; 702), der sich zwischen einer Vorderkante (404; 504; 604; 704) und einer Hinterkante in einer axialen Richtung und zwischen einer Druckseite (406) und einer Saugseite (408) in einer Umfangsrichtung erstreckt;
eine innere kalte Wand (414; 714), die einen Vorderkantenzufuhrhohlraum (416; 516; 616; 716) in der Nähe der Vorderkante des Schaufelprofilkörpers definiert;
eine äußere warme Wand (412; 712), die einen Vorderkantenhautkernhohlraum (410; 510; 610; 710) zwischen der äußeren warmen Wand und der inneren kalten Wand definiert, wobei der Vorderkantenhautkernhohlraum einen Aufpralleinlassabschnitt (420; 520A, 520B; 620A, 620B; 720) und einen Filmauslassabschnitt (422; 522A, 522B; 622A, 622B; 722) umfasst;
mindestens ein Aufprallloch (418; 518A, 518B; 618A, 618B; 718), das in der inneren kalten Wand gebildet ist und den Vorderkantenzufuhrhohlraum fluidisch mit dem Aufpralleinlassabschnitt verbindet; und
mindestens ein Filmkühlloch (424), das in der äußeren warmen Wand gebildet ist und den Filmauslassabschnitt fluidisch mit einem Außenbereich des Schaufelprofilkörpers verbindet,
**dadurch gekennzeichnet, dass** der Aufpralleinlassabschnitt eine erste Höhe (H₁) aufweist, die als ein Abstand zwischen der äußeren warmen Wand und der inneren kalten Wand für eine Länge des Aufpralleinlassabschnitts definiert ist, und der Filmauslassabschnitt eine zweite Höhe (H₂) aufweist, die größer als die erste Höhe ist; und
sich eine Vorderkantenrippe (526; 626) zwischen der äußeren warmen Wand und der inneren kalten Wand erstreckt und den Vorderkantenhautkernhohlraum (510; 610) teilt, wobei die Vorderkantenrippe den Vorderkantenhautkernhohlraum fluidisch trennt, um einen ersten Aufpralleinlassabschnitt (520A; 620A) und einen zweiten Aufpralleinlassabschnitt (520B; 620B) zu definieren.

2. Schaufelprofil nach Anspruch 1, wobei die Vorderkantenrippe (626) an der Vorderkante (604) des Schaufelprofilkörpers (602) ausgerichtet ist oder wobei die Vorderkantenrippe (526) gegenüber der Vorderkante (504) des Schaufelprofilkörpers (502) versetzt ist.

3. Schaufelprofil nach einem der vorhergehenden Ansprüche, wobei die erste Höhe (H₁) im Wesentlichen konstant ist.

4. Schaufelprofil nach einem der vorhergehenden Ansprüche, wobei die erste Höhe (H₁) zwischen 0,015 Zoll und 0,050 Zoll (0,38 mm und 1,27 mm) beträgt.

5. Schaufelprofil nach einem der vorhergehenden Ansprüche, wobei es sich bei der zweiten Höhe (H₂) um eine maximale Höhe des Filmauslassabschnitts (422; 522A, 522B; 622A, 622B; 722) handelt.

6. Schaufelprofil nach einem der vorhergehenden Ansprüche, das ferner mindestens ein Verstärkungsmerkmal (728) zur Wärmeübertragung umfasst, das innerhalb des Vorderkantenhautkernhohlraums (710) platziert ist; wahlweise wobei das mindestens eine Verstärkungsmerkmal zur Wärmeübertragung auf einer inneren Fläche der äußeren warmen Wand (712) des Schaufelprofilkörpers (702) gebildet ist.

7. Kernbaugruppe (850) zum Bilden des Schaufelprofils (400; 500; 600; 700) nach einem der vorhergehenden Ansprüche, wobei die Kernbaugruppe Folgendes umfasst:
einen Vorderkantenzufuhrhohlraumkern (852), der platziert ist, um einen inneren Vorderkantenzufuhrhohlraum eines gebildeten Schaufelprofils zu bilden; und
einen Vorderkantenhautkern (854), der relativ zu dem Vorderkantenzufuhrhohlraumkern positioniert und damit durch mindestens ein Aufpralllochkernelement (856) verbunden ist, wobei der Vorderkantenhautkern einen Aufpralleinlassabschnittskern (858) und einen Filmauslassabschnittskern (860) umfasst, wobei der Vorderkantenhautkern angeordnet ist, um einen Vorderkantenhautkernhohlraum an einer Vorderkante des gebildeten Schaufelprofils zu bilden;
wobei der Aufpralleinlassabschnittskern eine erste Dicke (T₁) aufweist und der Filmauslassabschnitt eine zweite Dicke (T₂) aufweist, die größer als die erste Dicke ist.

8. Kernbaugruppe nach Anspruch 7, wobei die erste Dicke (T₁) im Wesentlichen konstant ist.

9. Kernbaugruppe nach Anspruch 7 oder Anspruch 8, wobei die erste Dicke (T₁) zwischen 0,015 Zoll und 0,050 Zoll (0,38 mm und 1,27 mm) beträgt.

10. Kernbaugruppe nach einem der Ansprüche 7 bis 9, wobei es sich bei der zweiten Dicke (T₂) um eine maximale Höhe des Filmauslassabschnittkerns (860) handelt.

11. Verfahren zum Bilden des Schaufelprofils (400; 500; 600; 700) nach einem der Ansprüche 1 bis 6, wobei das Verfahren Folgendes umfasst:
Bilden des Schaufelprofils (402; 502; 602; 702);
Bilden des mindestens einen Aufpralllochs (418; 518A, 518B; 618A, 618B; 718) in der inneren kalten Wand und fluidisches Verbinden des Vorderkantenzufuhrhohlraums mit dem Aufpralleinlassabschnitt; und
Bilden des mindestens einen Filmkühllochs (424) in der äußeren warmen Wand und fluidisches Verbinden des Filmauslassabschnitts mit einem Außenbereich des Schaufelprofilkörpers;
**gekennzeichnet durch**
Bilden einer Vorderkantenrippe (526; 626), die sich zwischen der äußeren warmen Wand und der inneren kalten Wand erstreckt und den Vorderkantenhautkernhohlraum (510; 610) teilt, wobei die Vorderkantenrippe den Vorderkantenhautkernhohlraum fluidisch trennt, um einen ersten Aufpralleinlassabschnitt (520A; 620A) und einen zweiten Aufpralleinlassabschnitt (520B; 620B) zu definieren.

## Revendications

1. Profil aérodynamique (400 ; 500 ; 600 ; 700) pour un moteur à turbine à gaz (20), le profil aérodynamique comprenant :
un corps de profil aérodynamique (402 ; 502 ; 602 ; 702) s'étendant entre un bord d'attaque (404 ; 504 ; 604 ; 704) et un bord de fuite dans une direction axiale et entre un intrados (406) et un extrados (408) dans une direction circonférentielle ;
une paroi froide interne (414 ; 714) définissant une cavité d'alimentation de bord d'attaque (416 ; 516 ; 616 ; 716) à proximité du bord d'attaque du corps de profil aérodynamique ;
une paroi chaude externe (412 ; 712) définissant une cavité de noyau de revêtement de bord d'attaque (410 ; 510 ; 610 ; 710) entre la paroi chaude externe et la paroi froide interne, dans lequel la cavité de noyau de revêtement de bord d'attaque comprend une partie d'entrée d'impact (420 ; 520A, 520B ; 620A, 620B ; 720) et une partie de sortie de film (422 ; 522A, 522B ; 622A, 622B ; 722) ;
au moins un trou d'impact (418 ; 518A, 518B ; 618A, 618B ; 718) formé dans la paroi froide interne et reliant de manière fluidique la cavité d'alimentation de bord d'attaque à la partie d'entrée d'impact ; et
au moins un trou de refroidissement de film (424) formé dans la paroi chaude externe et reliant de manière fluidique la partie de sortie de film à un extérieur du corps de profil aérodynamique,
**caractérisé en ce que** la partie d'entrée d'impact a une première hauteur (H₁) définie comme une distance entre la paroi chaude externe et la paroi froide interne sur une longueur de la partie d'entrée d'impact, et la partie de sortie de film a une seconde hauteur (H₂) qui est supérieure à la première hauteur ; et
une nervure de bord d'attaque (526 ; 626) s'étend entre la paroi chaude externe et la paroi froide interne et divise la cavité de noyau de revêtement de bord d'attaque (510 ; 610), dans lequel la nervure de bord d'attaque sépare de manière fluidique la cavité de noyau de revêtement de bord d'attaque pour définir une première partie d'entrée d'impact (520A ; 620A) et une seconde partie d'entrée d'impact (520B ; 620B).

2. Profil aérodynamique selon la revendication 1, dans lequel la nervure de bord d'attaque (626) est alignée avec le bord d'attaque (604) du corps de profil aérodynamique (602), ou dans lequel la nervure de bord d'attaque (526) est décalée du bord d'attaque (504) du corps de profil aérodynamique (502).

3. Profil aérodynamique selon une quelconque revendication précédente, dans lequel la première hauteur (H₁) est sensiblement constante.

4. Profil aérodynamique selon une quelconque revendication précédente, dans lequel la première hauteur (H₁) est comprise entre 0,015 pouce et 0,050 pouce (0,38 mm et 1,27 mm).

5. Profil aérodynamique selon une quelconque revendication précédente, dans lequel la seconde hauteur (H₂) est une hauteur maximale de la partie de sortie de film (422 ; 522A, 522B ; 622A, 622B ; 722).

6. Profil aérodynamique selon une quelconque revendication précédente, comprenant en outre au moins une caractéristique d'augmentation de transfert de chaleur (728) située à l'intérieur de la cavité de noyau de revêtement de bord d'attaque (710) ; éventuellement, dans lequel l'au moins une caractéristique d'augmentation de transfert de chaleur est formée sur une surface interne de la paroi chaude externe (712) du corps de profil aérodynamique (702).

7. Ensemble noyau (850) de formation du profil aérodynamique (400 ; 500 ; 600 ; 700) selon une quelconque revendication précédente, l'ensemble noyau comprenant :
un noyau de cavité d'alimentation de bord d'attaque (852) situé pour former une cavité d'alimentation de bord d'attaque interne d'un profil aérodynamique formé ; et
un noyau de revêtement de bord d'attaque (854) positionné par rapport au noyau de cavité d'alimentation de bord d'attaque et relié à celui-ci par au moins un élément de noyau de trou d'impact (856), dans lequel le noyau de revêtement de bord d'attaque comprend un noyau de partie d'entrée d'impact (858) et un noyau de partie de sortie de film (860), dans lequel le noyau de revêtement de bord d'attaque est agencé pour former une cavité de noyau de revêtement de bord d'attaque au niveau d'un bord d'attaque du profil aérodynamique formé ;
dans lequel le noyau de partie d'entrée d'impact a une première épaisseur (T₁) et la partie de sortie de film a une seconde épaisseur (T₂) qui est supérieure à la première épaisseur.

8. Ensemble noyau selon la revendication 7, dans lequel la première épaisseur (T₁) est sensiblement constante.

9. Ensemble noyau selon la revendication 7 ou la revendication 8, dans lequel la première épaisseur (T₁) est comprise entre 0,015 pouce et 0,050 pouce (0,38 mm et 1,27 mm).

10. Ensemble noyau selon l'une quelconque des revendications 7 à 9, dans lequel la seconde épaisseur (T₂) est une hauteur maximale du noyau de partie de sortie de film (860).

11. Procédé de formation du profil aérodynamique (400 ; 500 ; 600 ; 700) selon l'une quelconque des revendications 1 à 6, le procédé comprenant :
la formation du corps de profil aérodynamique (402 ; 502 ; 602 ; 702) ;
la formation de l'au moins un trou d'impact (418 ; 518A, 518B ; 618A, 618B ; 718) dans la paroi froide interne et reliant de manière fluidique la cavité d'alimentation de bord d'attaque à la partie d'entrée d'impact ; et
la formation de l'au moins un trou de refroidissement de film (424) dans la paroi chaude externe et reliant de manière fluidique la partie de sortie de film à un extérieur du corps de profil aérodynamique ; **caractérisé par**
la formation d'une nervure de bord d'attaque (526 ; 626) s'étendant entre la paroi chaude externe et la paroi froide interne et divisant la cavité de noyau de revêtement de bord d'attaque (510 ; 610), dans lequel la nervure de bord d'attaque sépare de manière fluidique la cavité de noyau de revêtement de bord d'attaque pour définir une première partie d'entrée d'impact (520A ; 620A) et une seconde partie d'entrée d'impact (520B ; 620B).
